# FASCICULE DE BREVET EUROPEEN

(11) **EP 1 382 890 B1**
(45) Date de publication et mention de la délivrance du brevet: **22.03.2006**
(21) Numéro de dépôt: 03291737.9
(22) Date de dépôt: 11.07.2003
(51) Int. Cl.: F16H 61/06, F16H 61/30

(54) **Boîte de vitesses pour un vehicule automobile, limitant les ruptures de couples**
Momentunterbrechung-begrenzendes Fahrzeuggetriebe
Automotive gear box limiting torque flow interruptions

(30) Priorité: 15.07.2002 FR 0208889
(43) Date de publication de la demande: 21.01.2004
(73) Titulaire: Peugeot Citroen Automobiles S.A., 78140 Vélizy Villacoublay (FR)
(72) Inventeur: Pissonnier, Yann, 78140 Velizy-Villacoublay (FR)
(74) Mandataire: Warcoin, Jacques

(56) Documents cités:
- EP-A- 0 566 399
- FR-A- 2 811 395
- US-A- 5 480 014

## Description

L'invention concerne une boîte de vitesses pour un véhicule automobile dont la propulsion peut être assurée notamment par un moteur thermique, une machine électrique ou encore par la combinaison d'un moteur thermique et d'une machine électrique.

De façon classique, une boîte de vitesses mécanique comprend une ligne primaire motrice et une ligne secondaire réceptrice du mouvement, ces deux lignes étant parallèles.

La ligne primaire et la ligne secondaire portent des pignons, lesquels sont montés fous sur la ligne primaire et immobilisés en rotation et en translation sur la ligne secondaire, ou inversement.

En fonction du rapport de vitesses choisi, les pignons fous sont solidarisés avec leur arbre au moyen d'un synchroniseur ou baladeur.

De façon connue, un synchroniseur est disposé entre deux pignons fous, chaque pignon fou portant une roue dentée de crabotage et un cône d'embrayage mâle.

Le synchroniseur comprend un manchon solidaire de l'arbre par un dispositif à cannelures, au moyen duquel il peut coulisser sur l'arbre. Le manchon porte sur chacune de ses faces, en regard d'un pignon fou, un cône d'embrayage.

Par ailleurs, la surface cylindrique externe du manchon porte une denture semblable à celle des roues de crabotage des pignons fous, sur laquelle peut coulisser une couronne à denture intérieure.

Un dispositif communément appelé « fourchette de commande » est destiné à coopérer avec la couronne du manchon, en s'engageant dans une gorge ménagée dans la couronne.

Pour solidariser un pignon avec l'arbre, on débraye puis on déplace le baladeur vers ce pignon, en actionnant la fourchette de commande.

Les cônes d'embrayage du pignon et du baladeur viennent au contact et, dans un deuxième temps, la couronne du manchon vient en prise avec la roue dentée de crabotage du pignon.

Les boîtes de vitesses mécaniques de l'état de la technique sont donc complexes puisqu'elles nécessitent la présence de plusieurs synchroniseurs, chacun comportant plusieurs éléments mécaniques en mouvement et la présence d'une roue dentée sur chaque pignon fou pour coopérer avec le synchroniseur associé.

Par ailleurs, un embrayage est nécessairement prévu entre le moteur thermique, voire la machine électrique, et l'arbre menant pour désolidariser le moteur et/ou la machine, électrique de l'arbre, lors d'un changement de vitesse.

Malgré cette construction complexe, les boîtes de vitesses mécaniques provoquent des ruptures de couple lors de changements de vitesse.

Dans l'état de la technique, ce problème a été résolu en prévoyant une propulsion hybride, la machine électrique compensant les ruptures de couple grâce à une commande appropriée.

Ainsi, la demande de brevet FR-00 08820, publiée sous le n° FR-A-2 811 395, décrit une boite de vitesses mécanique pour véhicules à propulsion hybride dont la ligne primaire comporte deux arbres menants, l'un étant entraîné en rotation par le moteur thermique et par l'intermédiaire d'un embrayage et l'autre étant entraîné en rotation par la machine électrique.

Lors d'un changement de vitesse, la machine électrique et le système de liaison entre les deux arbres sont pilotés de manière appropriée pour éviter une rupture de couple. Cette demande fait partie de l'état de la technique le plus pertinent vis-à-vis de l'object des revendications indépendantes 1 et 6.

Ce problème peut également être résolu avec une boîte de vitesses comprenant deux arbres primaires et deux embrayages, chacun d'eux étant reljé'à un des deux arbres primaires.

Le document EP-0 566 399 décrit une transmission automatique qui comprend un convertisseur de couple, une transmission par boîte de vitesses, un circuit hydraulique et un contrôleur.

La boîte de vitesses comprend deux arbres dont l'un comporte deux pignons montés fous et correspondant à deux rapports de vitesses différents.

A chacun des pignons est associé un embrayage hydraulique, dont le fonctionnement est assuré par le circuit hydraulique sous la commande du contrôleur. Le contrôleur est programmé pour réduire les à-coups qui se produisent à la fin d'une opération de changement de vitesse.

Les différents programmes de commande exécutés par le contrôleur sont relativement complexes, d'autant plus qu'ils doivent tenir compte des temps d'élimination d'espace mort et des temps de relâchement de pression spécifiques à chaque embrayage hydraulique.

Tous ces dispositifs sont de construction complexe, donc d'un coût important.

L'invention a pour but de pallier ces inconvénients en proposant une boîte de vitesses permettant à la fois de supprimer les embrayages et de limiter considérablement les ruptures de couple lors de changements de vitesse.

Ainsi, l'invention concerne un boîte de vitesses mécanique pour un véhicule automobile auquel est associé un système de propulsion, cette boîte de vitesses comportant une ligne primaire motrice et une ligne secondaire réceptrice du mouvement, une de ces deux lignes comportant au moins deux pignons de diamètres différents, correspondant à des rapports de vitesse différents et montés fous sur ladite ligne, à chacun desquels est associé un baladeur dont le fonctionnement est assuré par un système d'actionnement, sous la commande d'un dispositif de commande pour assurer le transfert du couple moteur d'un pignon à l'autre sans rupture de couple, caractérisée en ce que la ligne primaire motrice est liée mécaniquement en permanence audit système de propulsion, sans l'intermédiaire d'un embrayage, et en ce que chaque pignon et chaque baladeur associé comportent un cône d'embrayage, les cônes d'un pignon et du baladeur associé pouvant coopérer par pression pour assurer la transmission du couple moteur, et ledit dispositif de commande commandant lesdits systèmes d'actionnement lors du passage d'une vitesse à une autre, en fonction notamment de la vitesse du véhicule et du régime du moteur, pour modifier progressivement la pression entre les cônes d'embrayage d'un pignon et du baladeur associé et entre ceux d'un autre pignon et du baladeur associé.

De préférence, le système d'actionnement d'un baladeur comprend un piston pouvant se déplacer dans un cylindre, sous l'effet d'une pression générée par une pompe hydraulique.

Dans un mode particulier de réalisation, le piston se déplace à rencontre d'un ressort.

Dans une variante de réalisation, le système d'actionnement est commun à deux baladeurs et comprend un piston pouvant se déplacer dans un cylindre à l'encontre de l'un ou l'autre de deux ressorts et sous l'effet d'une différence de pression générée par une pompe hydraulique.

De façon avantageuse, le dispositif de commande comprend un calculateur qui commande le fonctionnement de ladite pompe hydraulique.

L'invention concerne également un procédé de changement de vitesses dans une boite de vitesses mécanique d'un véhicule automobile, cette boite de vitesses étant conforme à l'invention.

Ce procédé consiste à piloter le dispositif de commande des systèmes d'actionnement des baladeurs lors du passage d'une vitesse à une autre, en fonction notamment de la vitesse du véhicule et du régime du moteur, pour modifier progressivement la pression entre les cônes d'embrayage d'un pignon et du baladeur associé et entre ceux d'un autre pignon et du baladeur associé et assurer ainsi le transfert du couple moteur d'un pignon à l'autre sans rupture de couple.

De manière avantageuse, le procédé peut consister à piloter le dispositif de commande des systèmes d'actionnement des baladeurs de façon à ce que la modification de la pression entre les cônes d'embrayage d'un pignon et du baladeur associé et entre ceux d'un autre pignon et du baladeur associé soit sensiblement continue et symétrique.

L'invention concerne également un véhicule automobile équipé d'une boîte de vitesses selon l'invention, dont la propulsion est assurée par un moteur thermique et/ou une machine électrique.

L'invention sera mieux comprise et d'autres buts, avantages et caractéristiques de celle-ci apparaîtront plus clairement à la lecture de la description qui suit et qui est faite en regard des dessins annexés, sur lesquels :
- la figure 1 représente de façon partielle et schématique, deux pignons, un baladeur, un système d'actionnement et deux dispositifs de commande d'une boîte de vitesses selon l'invention,
- la figure 2 comporte deux courbes représentant chacune, en fonction du temps, la pression entre le cône d'embrayage d'un pignon et le cône d'embrayage associé du baladeur, la première courbe (--) concernant un pignon d'un premier rapport et la deuxième courbe (··) correspondant à un pignon de rapport supérieur au premier,
- la figure 3 est semblable à la figure 1 et illustre une variante du système d'actionnement, et
- la figure 4 est également semblable à la figure 1 et illustre une autre variante du système d'actionnement.

Les éléments communs aux différentes figures seront désignés par les mêmes références numériques.

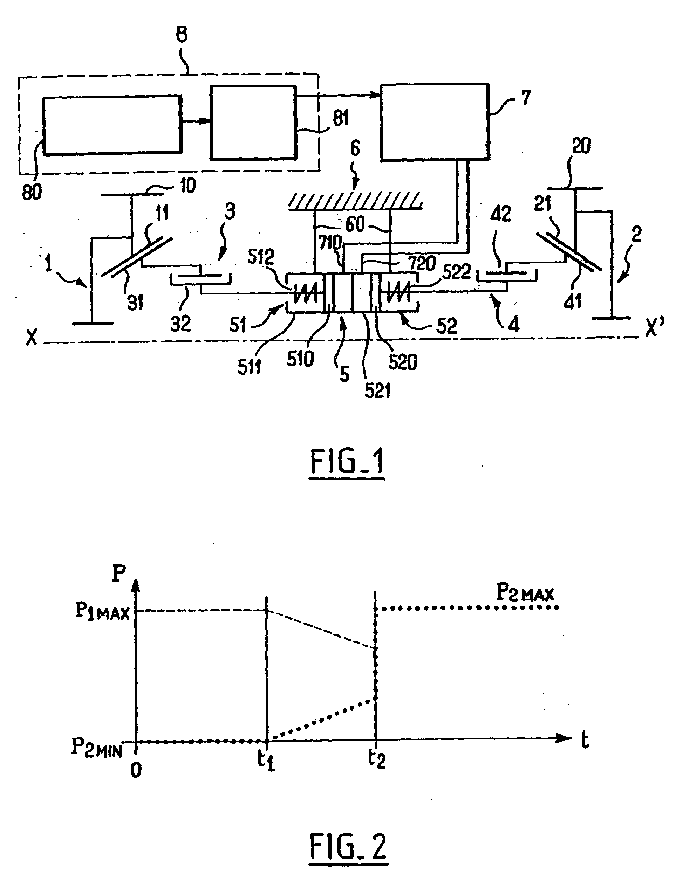

On se réfère tout d'abord à la figure 1, sur laquelle l'axe XX' représente la ligne primaire ou la ligne secondaire de la boîte de vitesses selon l'invention.

La référence 1 désigne un premier pignon de la boîte de vitesses, monté fou sur la ligne XX', tandis que la référence 2 désigne un deuxième pignon, également monté fou sur la ligne XX'.

Ces deux pignons 1 et 2 sont représentés partiellement, compte tenu de leur symétrie par rapport à la ligne XX'.

Les références 10, respectivement 20, désignent la denture du pignon 1, respectivement 2.

Les références 11, respectivement 21, désignent le cône d'embrayage du pignon 1, respectivement du pignon 2, qui sont ici des cônes femelles.

A chaque pignon correspond un rapport de vitesse différent. Ici, le pignon 2 correspond à un rapport de vitesse supérieur au rapport du pignon 1.

Au pignon 1 est associé un baladeur 3. Celui-ci comprend un cône d'embrayage 31 destiné à coopérer par pression avec le cône d'embrayage 11 du pignon 1 pour assurer la transmission du couple moteur ainsi qu'un dispositif 32, communément appelé « fourchette de commande », et destiné à déplacer le cône d'embrayage 31.

De même, un baladeur 4 est associé au pignon 2, avec un cône d'embrayage 41 destiné à coopérer par pression avec le cône d'embrayage 21 du pignon 2 pour assurer la transmission du couple moteur et un dispositif 42, communément appelé « fourchette de commande », et destiné à déplacer le cône 41.

Ainsi, le dispositif 32 peut déplacer le cône 31 pour qu'il soit en contact avec le cône 11 et que la pression entre les deux cônes soit suffisante pour que le couple moteur soit transmis par l'intermédiaire des cônes 31 et 11. Dans cette situation, c'est le rapport de vitesse correspondant au pignon 1 qui est enclenché.

Dans cette même situation, le dispositif 42 est actionné de façon à ce que les cônes 21 et 41 ne soient pas en contact ou que la pression entre ceux-ci ne permette pas la transmission du couple moteur. Le rapport de vitesse correspondant au pignon 2 n'est alors pas enclenché.

A chaque dispositif 32, 42 du baladeur 3, 4, est associé un système d'actionnement 51, 52.

Dans l'exemple de réalisation décrit à la figure 1, ces deux dispositifs d'actionnement sont regroupés dans un même module 5, relié au carter 6 de la boîte de vitesses par des moyens appropriés 60.

Les deux systèmes d'actionnement 51, respectivement 52, comportent un piston 510, respectivement 520, qui peut se déplacer dans un cylindre 511, respectivement 521, du module 5 et ceci à l'encontre d'un ressort 512, respectivement 522 et sous l'effet d'une pression générée par une pompe hydraulique 7.

De façon classique, cette pompe hydraulique 7 est reliée à chacun des cylindres 511, 521, par l'intermédiaire d'un conduit 710, respectivement 720.

La pompe hydraulique 7 est, dans cet exemple de réalisation, commune aux deux systèmes d'actionnement 51 et 52 associés à chacun des pignons 1 et 2.

Cette pompe 7 est commandée par le dispositif de commande 8 de la boîte de vitesses selon l'invention.

Ce dispositif de commande comprend essentiellement un ensemble 80 de capteurs ou autres permettant de délivrer à un calculateur 81 les informations nécessaires à la commande de la pompe hydraulique 7, telles que notamment la vitesse du véhicule et le régime du moteur assurant la propulsion du véhicule.

Le fonctionnement de la boîte de vitesses selon l'invention va maintenant être décrit plus en détail en référence à la figure 2.

A titre d'exemple, le fonctionnement décrit concerne le passage d'une première vitesse correspondant au premier pignon 1 à une deuxième vitesse, supérieure à la première, correspondant au pignon 2.

La courbe illustrée en traits pointillés (--) représente l'évolution au cours du temps de la pression P₁ entre les deux cônes d'embrayage 11 et 31, respectivement du pignon 1 et de son baladeur 3, tandis que l'autre courbe (··) représente l'évolution au cours du temps de la pression P₂ entre les deux cônes d'embrayage 21 et 41 respectivement du pignon 2 et de son baladeur 4.

Les courbes ne représentent bien sûr qu'un exemple d'évolution de la pression entre chaque paire de cônes d'embrayage.

Au temps t=0, la pression P₁ est maximale. Dans cette situation, la vitesse correspondant au pignon 1 est engagée et la pompe hydraulique 7 est commandée par le dispositif de commande 8 de façon à créer le contact entre les deux cônes d'embrayage 11 et 31.

Parallèlement, au temps t=0, la pression P₂ entre les deux cônes d'embrayage 21 et 41 est nulle, le rapport de vitesse correspondant au pignon 2 n'étant pas engagé.

Cette situation perdure jusqu'au temps t=t₁. A ce moment là, compte tenu notamment de la vitesse du véhicule ou du régime du moteur ou encore à la demande du conducteur, le dispositif de commande 8 initie un changement de vitesse.

Entre les temps t₁ et t₂, le dispositif de commande 8 commande la pompe hydraulique 7 de telle sorte que la pression P₁ entre les cônes d'embrayage 11 et 31 diminue progressivement, alors que la pression P₂ entre les cônes d'embrayage 21 et 41 augmente également de manière progressive.

Ainsi, pendant cette période, la pression exercée sur le piston 510 est réduite, tandis que celle exercée sur le piston 520 augmente pour que le cône d'embrayage 41 vienne progressivement en contact avec le cône d'embrayage 21 du pignon 2.

Cependant, dans l'intervalle de temps compris entre t₁ et t₂, un couple est effectivement transmis par l'intermédiaire des deux cônes 11 et 31, alors qu'aucun couple ne passe par l'intermédiaire des cônes 21 et 41 qui glissent l'un sur l'autre.

Dans l'exemple illustré ici, la commande de la pompe hydraulique 7 s'effectue de façon sensiblement continue et de manière symétrique sur chacun des systèmes d'actionnement 51 et 52.

Cependant, on pourrait envisager un autre type de commande, l'essentiel étant qu'elle permette une modification progressive et en sens inverse de la pression entre chaque paire de cônes d'embrayage 11, 31 et 21,41.

La pression continuant à augmenter dans le cylindre 521, il arrive un moment (instant t₂) où le cône d'embrayage 41 se trouve complètement en contact avec le cône d'embrayage 21 du pignon 2, ce qui supprime tout passage de couple entre le cône d'embrayage 31 et le cône d'embrayage 11 du pignon 1.

Plus précisément, à l'instant t₂, le cône 41 est mis en contact avec le cône 21 avec une pression suffisante pour que le couple moteur passe par ces deux cônes. Le couple passe alors par les cônes 21 et 41 et cesse aussitôt de passer par les cônes 11 et 31 qui se mettent à glisser l'un sur l'autre, d'autant plus que la pression exercée sur eux a diminué et qu'ils sont proches de leur limite de glissement.

De plus, pour une grande sûreté de fonctionnement, on peut prévoir, le système étant piloté, de surveiller la vitesse de rotation des différents cônes et de relâcher complètement la pression dans le cylindre 511 pour libérer les cônes 11 et 31 dès que le couple moteur passe par les cônes 21 et 41 (ces derniers tournent alors à la même vitesse).

Cette commande permet de transférer le couple du pignon 1 au pignon 2, sans rupture et sans qu'il soit nécessaire de déconnecter la ligne motrice de la boîte de vitesses du système de propulsion du véhicule.

Ainsi, en pratique, la ligne motrice est reliée en permanence au système de propulsion du véhicule, sans qu'il soit nécessaire de prévoir un embrayage et, par ailleurs, le dispositif de commande 8 permet d'éviter toute rupture de couple lors des changements de vitesse.

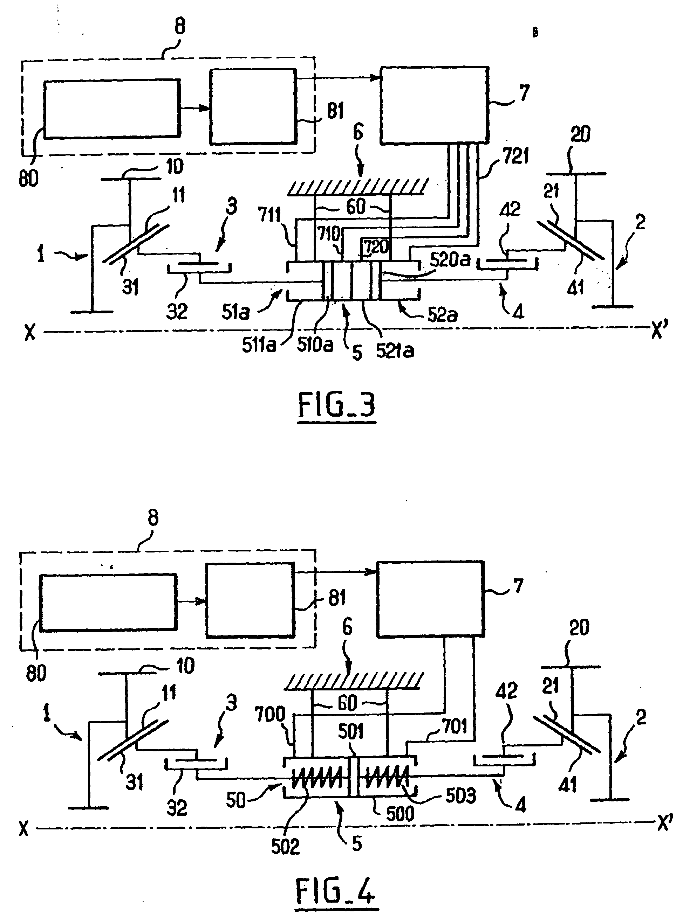

On se réfère maintenant à la figure 3 qui est une vue similaire à celle de la figure 1 et qui représente une variante du système d'actionnement des baladeurs 3 et 4.

Ainsi, seuls ces systèmes d'actionnement seront décrits en détail, les autres éléments étant identiques à ceux de la figure 1.

Les deux systèmes d'actionnement 51a, respectivement 52a, des dispositifs 32, respectivement 42, sont toujours logés dans le module 5.

Celui-ci définit toujours deux cylindres 511a, respectivement 521a, dans lesquels peuvent se déplacer des pistons 510a, respectivement 520a.

Chacun de ces deux pistons 510a, respectivement 520a, peut se déplacer dans le cylindre 511a, 521a, sous l'effet d'une pression générée par la pompe hydraulique 7.

Cette dernière est reliée au cylindre 511a, respectivement 521a, par l'intermédiaire des conduits 710 et 711, respectivement 720 et 721.

Ainsi, le fonctionnement de ces systèmes d'actionnement 51 a et 52a est légèrement différent des systèmes d'actionnement 51 et 52 de la figure 1.

En effet, les dispositifs d'actionnement 51 et 52 sont dits « simple effet », c'est-à-dire que la position « repos » des systèmes d'actionnement est maintenue par les ressorts 512 et 522.

De plus, pour déplacer le cône 31 vers le cône 11, on introduit du fluide sous pression par l'intermédiaire du conduit 710. Pour changer le sens du déplacement du piston, et donc pour diminuer ou supprimer le contact entre les deux cônes 11 et 31, on relâche la pression de fluide dans le conduit 710, le ressort 512 ramenant automatiquement le piston 510 dans sa position de départ.

Au contraire, les systèmes d'actionnement 51a et 52a sont des actionneurs « double effet », c'est-à-dire que le déplacement d'un piston dans un sens ou dans l'autre est obtenu en injectant du fluide sous pression dans l'un ou l'autre des conduits de la pompe reliés au cylindre associé au piston.

Ainsi, pour mettre en contact le cône 31 et le cône 11, du fluide sous pression est injecté dans le conduit 710. Au contraire, pour réduire ou supprimer tout contact entre les cônes 11 et 31, du fluide sous pression est introduit dans le cylindre 511a par l'intermédiaire du conduit 711.

On notera que dans les exemples de réalisation des systèmes d'actionnement des figures 1 et 3, la commande de ces systèmes d'actionnement est réalisée de façon indépendante.

On se réfère maintenant à la figure 4 qui illustre une autre variante de réalisation des systèmes d'actionnement des baladeurs 3 et 4, qui sera seule décrite en détail.

Dans cette variante de réalisation, le système d'actionnement 50 est commun aux deux baladeurs 3 et 4.

Dans ce cas, le module 5 définit un seul cylindre 500, dans lequel peut se déplacer un piston 501.

Le déplacement du piston 501 s'effectue à l'encontre de ressorts 502, respectivement 503.

La commande du piston 501 s'effectue par l'intermédiaire de fluide sous pression, injecté dans le cylindre 500, par l'intermédiaire des conduits 700 ou 701.

Ainsi, à titre d'exemple, lorsque le système d'actionnement 4 doit mettre en contact le cône d'embrayage 41 avec le cône d'embrayage 21 du piston 2, du fluide sous pression est envoyé par la pompe hydraulique 7 dans le conduit 700, de façon à déplacer le piston 501 du côté du pignon 2.

Lorsque le contact entre les deux cônes 21 et 41 doit être relâché progressivement, il suffit de diminuer progressivement la pression du fluide dans le conduit 700, le piston 501 étant ramené à sa position de point mort sous l'effet des ressorts 502 et 503.

Ainsi, dans le mode de réalisation de la figure 4, le système d'actionnement est commun aux deux pignons 1 et 2 et les commandes des baladeurs 3 et 4 sont liées.

On notera que dans ce mode de réalisation, les pignons 1 et 2 ne peuvent pas correspondre à des rapports de vitesse immédiatement voisins tels que 1^{ère} et 2^{ème} ou 3^{ème} et 4^{ème} car il est très difficile en pratique d'obtenir une construction parfaitement symétrique et les différentes pièces ne s'usent pas de la même façon au cours de la vie du véhicule.

Dans tous les modes de réalisation qui viennent d'être décrits, la boîte de vitesses selon l'invention présente l'avantage d'assurer les changements de vitesse sans rupture de couple et sans embrayage.

Avec ce type de boîte de vitesses, il est donc possible de supprimer la pédale d'embrayage. Le levier de vitesses peut être supprimé, mais il peut être également maintenu pour ne pas perturber les habitudes de conduite du conducteur.

Enfin, dans tous les modes de réalisation décrits ci-dessus, il y a un ou deux systèmes d'actionnement dans un module unique situé entre deux pignons, mais on ne sortirait pas du cadre de l'invention avec un module commandant un seul pignon, par exemple dans le cas d'un arbre comportant un nombre impair de pignons.

Les signes de référence insérés après les caractéristiques techniques figurant dans les revendications ont pour seul but de faciliter la compréhension de ces dernières et ne sauraient en limiter la portée.

## Revendications

1. Boîte de vitesses mécanique pour un véhicule automobile auquel est associé un système de propulsion, cette boîte de vitesses comportant une ligne primaire motrice et une ligne secondaire réceptrice du mouvement, une de ces deux lignes (XX') comportant au moins deux pignons (1, 2) de diamètres différents, correspondant à des rapports de vitesse différents et montés fous sur ladite ligne, à chacun desquels est associé un baladeur (3, 4) dont le fonctionnement est assuré par un système d'actionnement (51, 52 ; 51 a, 52a ; 50) sous la commande d'un dispositif de commande (8) pour assurer le transfert du couple moteur d'un pignon à l'autre sans rupture de couple, **caractérisée en ce que** la ligne primaire motrice (XX') est liée mécaniquement en permanence audit système de propulsion, sans l'intermédiaire d'un embrayage, et **en ce que** chaque pignon (1,2) et chaque baladeur associé (3,4) comportent un cône d'embrayage (11,21 ; 31,41), les cônes d'un pignon et du baladeur associé (11,31 ; 21,41) pouvant coopérer par pression pour assurer la transmission du couple moteur, et ledit dispositif de commande (8) commandant lesdits systèmes d'actionnement lors du passage d'une vitesse à une autre, en fonction notamment de la vitesse du véhicule et du régime du moteur, pour modifier progressivement la pression entre les cônes d'embrayage d'un pignon et du baladeur associé et entre ceux d'un autre pignon et du baladeur associé.

2. Boîte de vitesses selon la revendication 1, **caractérisée en ce que** le système d'actionnement (51, 52 ; 51a, 52a) d'un baladeur (3, 4) comprend un piston (510, 520 ; 510a, 520a) pouvant se déplacer dans un cylindre (511, 521; 511 a, 521a) sous l'effet d'une pression générée par une pompe hydraulique (7).

3. Boîte de vitesses selon la revendication 2, **caractérisée en ce que** les pistons (510, 520) se déplacent à rencontre d'un ressort (512, 522).

4. Boîte de vitesses selon la revendication 1, **caractérisée en ce que** le système d'actionnement (50) est commun à deux baladeurs (3, 4) et comprend un piston (501) pouvant se déplacer dans un cylindre (500), à l'encontre de l'un ou l'autre de deux ressorts (502, 503) et sous l'effet d'une différence de pression générée par une pompe hydraulique (7).

5. Boîte de vitesses selon l'une des revendications 2 à 4, **caractérisée en ce que** le dispositif de commande (8) comprend un calculateur (81) qui commande le fonctionnement de ladite pompe hydraulique (7).

6. Procédé de changement de vitesses dans une boite de vitesses mécanique d'un véhicule automobile, selon l'une des revendications 1 à 5, ledit procédé consistant à piloter le dispositif de commande (8) des systèmes d'actionnement (51, 52 ; 51a, 52a ; 50) des baladeurs (3, 4) lors du passage d'une vitesse à une autre, en fonction notamment de la vitesse du véhicule et du régime du moteur, pour modifier progressivement la pression entre les cônes d'embrayage d'un pignon et du baladeur associé et entre ceux d'un autre pignon et du baladeur associé et assurer ainsi le transfert du couple moteur d'un pignon à l'autre sans rupture de couple.

7. Procédé selon la revendication 6, consistant à piloter le dispositif de commande (8) des systèmes d'actionnement (51, 52 ; 51a, 52a ; 50) des baladeurs (3, 4) de façon à ce que la modification de la pression entre les cônes d'embrayage d'un pignon et du baladeur associé et entre ceux d'un autre pignon et du baladeur associé soit sensiblement continue et symétrique.

8. Véhicule automobile équipé d'une boîte de vitesses selon l'une des revendications 1 à 5, dont la propulsion est assurée par un moteur thermique et/ou une machine électrique.

## Claims

1. Mechanical gearbox for a motor vehicle with which a propulsion system is associated, this gearbox comprising a primary driveline and a secondary line receiving the motion, one of these two lines (XX') comprising at least two pinions (1, 2) of different diameters, corresponding to different gear ratios and mounted freely on the said line, there being associated with each of these a sliding sleeve (3, 4) operation of which is afforded by an actuating system (51, 52; 51a, 52a; 50) under the control of a control device (8) so as to transfer driving torque from one pinion to the other without any interruption in the torque flow, **characterized in that** the primary driveline (XX') is permanently mechanically connected to the said propulsion system, without the interposition of a clutch, and **in that** each pinion (1, 2) and each associated sliding sleeve (3, 4) comprise a clutch cone (11, 21; 31, 41), the cones of a pinion and of the associated sliding sleeve (11, 31; 21, 41) being able to collaborate in pressing so as to transmit the driving torque, and the said control device (8) controlling the said actuating systems when changing from one gear to another, particularly as a function of the speed of the vehicle and the engine speed, in order progressively to modify the pressure between the clutch cones of one pinion and its associated sliding sleeve and between those of another pinion and its associated sliding sleeve.

2. Gearbox according to Claim 1, **characterized in that** the actuating system (51, 52; 51a, 52a) for actuating a sliding sleeve (3, 4) comprises a piston (510, 520; 510a, 520a) able to move in a cylinder (511, 521; 511a, 521a) under the effect of a pressure generated by a hydraulic pump (7).

3. Gearbox according to Claim 2, **characterized in that** the pistons (510, 520) move against a spring (512, 522).

4. Gearbox according to Claim 1, **characterized in that** the actuating system (50) is common to two sliding sleeves (3, 4) and comprises a piston (501) able to move in a cylinder (500) against the action of one or other of two springs (502, 503) and under the effect of a pressure difference generated by a hydraulic pump (7).

5. Gearbox according to one of Claims 2 to 4, **characterized in that** the control device (8) comprises a computer (81) which controls the operation of the said hydraulic pump (7).

6. Method for changing gear in a motor vehicle mechanical gearbox according to one of Claims 1 to 5, the said method consisting in operating the control device (8) that controls the actuating systems (51, 52; 51a, 52a; 50) that actuate the sliding sleeves (3, 4) when changing from one gear to another, particularly as a function of the speed of the vehicle and of the engine speed, in order progressively to modify the pressure between the clutch cones of one pinion and its associated sliding sleeve and between those of another pinion and its associated sliding sleeve and thus ensure that the driving torque is transferred from one pinion to the other without any interruption in the torque flow.

7. Method according to Claim 6 that consists in operating the control device (8) that controls the actuating systems (51, 52; 51a, 52a; 50) that actuate the sliding sleeves (3, 4) in such a way that the change in pressure between the clutch cones of one pinion and its associated sliding sleeve and between those of another pinion and its associated sliding sleeve is more or less continuous and symmetric.

8. Motor vehicle equipped with a gearbox according to one of Claims 1 to 5, which is propelled by a combustion engine and/or an electrical machine.

## Patentansprüche

1. Mechanisches Getriebe für ein Kraftfahrzeug zu dem ein Antriebssystem gehört, wobei dieses Getriebe einen angetriebenen Primärstrang und einen Sekundärstrang für die Aufnahme der Bewegung umfaßt, wobei einer dieser beiden Stränge (XX') wenigstens zwei Zahnritzel (1, 2) mit verschiedenen Durchmessern umfaßt, die verschiedenen Gängen entsprechen und lose auf dem Strang angebracht sind, wobei zu jedem von diesen eine Schubgabel (3, 4) gehört, deren Funktion von einem Betätigungssystem (51, 52; 51a, 52a; 50) unter der Steuerung einer Steuervorrichtung (8) bereitgestellt wird, um die Übertragung des Motordrehmoments von einem Zahnritzel zum anderen ohne Drehmomentunterbrechung bereitzustellen, **dadurch gekennzeichnet, daß** der angetriebene Primärstrang (XX') ohne eine dazwischenliegende Kupplung permanent mit dem Antriebssystem mechanisch verbunden ist und dadurch, daß jedes Zahnritzel (1, 2) und jede zugehörige Schubgabel (3, 4) einen Kupplungskegel (11, 21; 31, 41) umfaßt, wobei die Kegel eines Zahnritzels und der zugehörigen Schubgabel (11, 31; 21, 41) durch Druckkraft zusammenarbeiten können, um die Übertragung des Motordrehmoments bereitzustellen, und wobei die Steuervorrichtung (8) die Betätigungssysteme beim Wechsel von einem Gang zu einem anderen insbesondere in Abhängigkeit von der Geschwindigkeit des Fahrzeugs und der Motordrehzahl steuert, um die Druckkraft zwischen den Kupplungskegeln eines Zahnritzels und der zugehörigen Schubgabel und zwischen denen eines anderen Zahnritzels und der zugehörigen Schubgabel progressiv zu verändern.

2. Getriebe nach Anspruch 1, **dadurch gekennzeichnet, daß** das Betätigungssystem (51, 52; 51a, 52a) einer Schubgabel (3, 4) einen Kolben (510, 520; 510a, 520a) umfaßt, der sich in einem Zylinder (511, 521; 511a, 521a) unter der Wirkung einer von einer Hydraulikpumpe (7) erzeugten Druckkraft verschieben kann.

3. Getriebe nach Anspruch 2, **dadurch gekennzeichnet, daß** die Kolben (510, 520) sich gegen eine Feder (512, 522) verschieben.

4. Getriebe nach Anspruch 1, **dadurch gekennzeichnet, daß** das Betätigungssystem (50) für zwei Schubgabeln (3, 4) gemeinsam ist und einen Kolben (501) umfaßt, der sich in einem Zylinder (500) verschieben kann und dies gegen die eine oder die andere von zwei Federn (502, 503) und unter der Wirkung einer Differenz der Druckkraft, die von einer Hydraulikpumpe (7) erzeugt wird.

5. Getriebe nach einem der Ansprüche 2 bis 4, **dadurch gekennzeichnet, daß** die Steuervorrichtung (8) einen Rechner (81) umfaßt, der den Betrieb der Hydraulikpumpe (7) steuert.

6. Verfahren zum Gangwechsel in einem mechanischen Getriebe eines Kraftfahrzeugs nach einem der Ansprüche 1 bis 5, wobei das Verfahren darin besteht, die Steuervorrichtung (8) der Betätigungssysteme (51, 52; 51a, 52a, 50) der Schubgabeln (3, 4) beim Wechsel von einem Gang zu einem anderen zu steuern, und dies insbesondere in Abhängigkeit von der Geschwindigkeit des Fahrzeugs und der Motordrehzahl, um die Druckkraft zwischen den Kupplungskegeln eines Zahnritzels und der zugehörigen Schubgabel und zwischen denen eines anderen Zahnritzels und der zugehörigen Schubgabel progressiv zu verändern und damit die Übertragung des Motordrehmoments von einem Zahnritzel zum anderen ohne Unterbrechung des Drehmoments bereitzustellen.

7. Verfahren nach Anspruch 6, das darin besteht, die Steuervorrichtung (8) der Betätigungssysteme (51, 52; 51a, 52a, 50) der Schubgabeln (3, 4) so zu steuern, daß die Veränderung der Druckkraft zwischen den Kupplungskegeln eines Zahnritzels und der zugehörigen Schubgabel und zwischen denen eines anderen Zahnritzels und der zugehörigen Schubgabel im wesentlichen kontinuierlich und symmetrisch ist.

8. Kraftfahrzeug, das mit einem Getriebe gemäß einem der Ansprüche 1 bis 5 ausgestattet ist und dessen Antrieb durch einen Verbrennungsmotor und/oder eine elektrische Maschine bereitgestellt wird.
